# EUROPEAN PATENT SPECIFICATION

(11) **EP 3 597 310 B1**
(45) Date of publication and mention of the grant of the patent: **12.08.2026**
(21) Application number: 17901031.9
(22) Date of filing: 01.12.2017
(51) Int. Cl.: B05C 11/10, B05C 5/02, B05D 3/00, B05D 7/00, H01M 4/88, H01M 8/02, H01M 8/10, H01M 4/04

(54) **COATING DEVICE AND COATING METHOD**
BESCHICHTUNGSVORRICHTUNG UND BESCHICHTUNGSVERFAHREN
DISPOSITIF DE REVÊTEMENT ET PROCÉDÉ DE REVÊTEMENT

(30) Priority: 17.03.2017 JP 2017052020
(43) Date of publication of application: 22.01.2020
(73) Proprietor: SCREEN Holdings Co., Ltd., Kyoto-shi, Kyoto 602-8585 (JP)
(72) Inventor: TAKAGI Yoshinori, Kyoto-shi Kyoto 602-8585 (JP); OMORI Masafumi, Kyoto-shi Kyoto 602-8585 (JP)
(74) Representative: Goddar, Heinz J.
(86) International application number: PCT/JP2017/043226
(87) International publication number: WO 2018/168105

(56) References cited:
- EP-A1- 2 813 363
- EP-A1- 3 050 703
- WO-A1-2012/132056
- WO-A1-2015/019711
- JP-A- 2004 195 348
- JP-A- 2011 206 641
- JP-A- 2012 130 907
- JP-A- 2016 039 102
- JP-A- 2016 049 535
- JP-A- H10 170 242
- US-A- 5 989 622
- US-A1- 2016 079 533

## Description

### Technical Field

The present invention relates to a coating apparatus and a coating method for coating a base material with a coating liquid.

### Background Art

In recent years, attention has been given to fuel cells as power sources for driving motor vehicles, mobile phones or the like. A fuel cell is a power generation system that generates electric power through an electrochemical reaction between hydrogen contained in a fuel and oxygen in the air. The fuel cell has advantages over other cells in its high power generation efficiency and low environmental load.

An example of the fuel cells is a polymer electrolyte fuel cell (PEFC) including an ion exchange membrane (electrolyte membrane) used as an electrolyte. The application of polymer electrolyte fuel cells to motor vehicles or portable devices has been expected because the polymer electrolyte fuel cells are capable of operating at room temperature and can be reduced in size and weight. In general, the polymer electrolyte fuel cells have a structure such that multiple cells are stacked one on top of another. One cell is comprised of a membrane electrode assembly (MEA) and a pair of separators provided on opposite sides of the membrane electrode assembly to sandwich the membrane electrode assembly therebetween. The membrane electrode assembly includes: a catalyst-coated membrane (CCM) including an electrolyte thin film (polymer electrolyte membrane) and catalyst layers on opposite sides of the electrolyte thin film; and gas diffusion layers disposed on opposite sides of the catalyst-coated membrane. The catalyst layers and the gas diffusion layers which are disposed on opposite sides of the polymer electrolyte membrane to sandwich the polymer electrolyte membrane therebetween constitute a pair of electrode layers. One of the two electrode layers is an anode electrode, and the other thereof is a cathode electrode. When a fuel gas containing hydrogen comes in contact with the anode electrode and air comes in contact with the cathode electrode, electric power is generated through an electrochemical reaction.

The aforementioned catalyst-coated membrane is produced by coating a surface of an electrolyte membrane with a catalyst material and then drying the catalyst material. The catalyst material is prepared by dispersing catalyst particles containing platinum (Pt) in a solvent such as alcohol. For coating of the catalyst material in the polymer electrolyte fuel cell, an intermittent coating process which intermittently applies the catalyst material to the surface of the electrolyte membrane is performed to eliminate loss of costly platinum catalyst. In this intermittent coating process, it is required that the catalyst material is applied to a coating position accurately.

An intermittent coating misregistration prevention apparatus which prevents a catalyst material from being applied to an improper position during intermittent coating is disclosed in Patent Literature 1. For example, when the catalyst material is ejected from a nozzle for coating by opening and closing a valve, there is a delay time interval between the sending of a valve opening/closing signal and the actual start or stop of the coating in some cases. In the case where the coating is performed while an object to be coated is moved, the to-be-coated object is also moved during the delay time interval. As a result, the coating is sometimes misregistered even if the coating position is detected. To solve such a problem, the apparatus disclosed in Patent Literature 1 keeps count of pulse signals proportional to the moving distance of the to-be-coated object which are emitted from a pulse generator provided on rollers for moving the to-be-coated object. Then, the apparatus subtracts the predetermined number of pulses corresponding to the delay time interval from the counted number of pulses to calculate the timing of the sending of the valve opening/closing signal. Thus, the apparatus is capable of controlling the opening and closing of the valve in consideration of the delay time interval to prevent the catalyst material from being applied to an improper position.
Patent Literature 2: EP 3 050 703
Patent Literature 3: JP H10 170242 A

### Citation List

### Patent Literature

Patent Literature 1: Japanese Patent Application Laid-Open No. 5-111658 (1993). Patent literature 2 discloses a coating apparatus comprising a transport part for transporting an elongated strip-shaped base material in a longitudinal direction, said base material including a plurality of to-be-coated regions arranged in said longitudinal direction, said to-be-coated regions being regions in which coating films are to be formed so as to be arranged in said longitudinal direction; a detection part for detecting said to-be-coated regions through the use of irradiation with light; and a coating part disposed downstream from said detection part as seen in a transport direction and for coating said to-be-coated regions detected by said detection part with a coating liquid, wherein said detection part detects a leading edge of each of said to- be-coated regions which is downstream as seen in said transport direction, wherein said coating part starts applying a coating of said coating liquid in response to timing of detection of the leading edge of each of said to-be-coated regions by means of said detection part, and wherein a distance between the position of coating by means of said coating part and the position of light irradiation by means of said detection part is shorter than a distance between leading edges of two adjacent ones of said to-be-coated regions which are contiguous in said transport direction. Patent literature 3 discloses a coating system with an adjustable angle of a detection system.

### Summary of Invention

### Technical Problem

Unfortunately, the apparatus disclosed in Patent Literature 1 is required to transport the to-be-coated object through some distance in order to obtain appropriate timing. This causes the to-be-coated object to have a region uncoated with the catalyst material. As a result, there is apprehension that the uncoated region of the to-be-coated object goes to waste.

In view of the foregoing, it is therefore an object of the present invention to provide a coating apparatus and a coating method for accurately coating to-be-coated regions with a coating liquid without wasting a base material.

### Solution to Problem

To solve the aforementioned problem, the present invention provides a coating apparatus according to claim 1 and a method of coating according to claim 6.
The respective dependent claims relate to special embodiments thereof.

### Advantageous Effects of Invention

According to the present invention, the coating position and the light irradiation position are in proximity to each other. By starting the coating immediately after the detection part detects a to-be-coated region, the detected to-be-coated region is coated with the coating liquid. That is, it is not necessary to transport the base material for the purpose of only detecting the coating position. As a result, this prevents the base material from being transported while the to-be-coated region is not coated with the coating liquid to thereby prevent a wasteful region from being formed on the base material.

In particular, according toa special embodiment, the irradiation angle of light is adjusted in accordance with the reflectivity of the to-be-coated regions, whereby the to-be-coated regions are detected with higher accuracy.

In particular, according to a further special embodiment, the detection accuracy of the to-be-coated regions is improved.

In particular, according to a further special embodiment, the detection part is protected from the coating liquid.

In particular, according to a further special embodiment, the coating process is facilitated by adapting the coating time period to the detection by means of the detection part.

In particular, according to a further special embodiment, the placement of the detection part is achieved even in the case where sufficient space cannot be provided.

### Brief Description of Drawings

[fig. 1] Fig. 1 is a diagrammatic view showing a configuration of a manufacturing apparatus according to an embodiment of the present invention.
[fig. 2] Fig. 2 is an enlarged view of a suction roller and its surroundings.
[fig. 3] Fig. 3 is a plan view of an angle adjusting mechanism.
[fig. 4] Fig. 4 is a sectional view taken along the line IV-IV of Fig. 3.
[fig. 5] Fig. 5 is a view for illustrating an optimum irradiation angle of a fiber sensor with respect to transparent first catalyst layers.
[fig. 6] Fig. 6 is a block diagram showing connections between a controller and parts of the manufacturing apparatus.
[fig. 7] Fig. 7 is a view for illustrating a positional relationship between a nozzle and the fiber sensor.
[fig. 8] Fig. 8 is a timing diagram for illustrating first catalyst layer detection timing and catalyst material coating timing.
[fig. 9] Fig. 9 is a flow diagram showing a procedure during coating by means of a coating part.

### Description of Embodiments

An embodiment according to the present invention will now be described with reference to the drawings. A "coating apparatus" according to the present invention will be described as a catalyst-coated membrane manufacturing apparatus for manufacturing a catalyst-coated membrane for a polymer electrolyte fuel cell.

### <1. Configuration of Catalyst-Coated Membrane Manufacturing Apparatus>

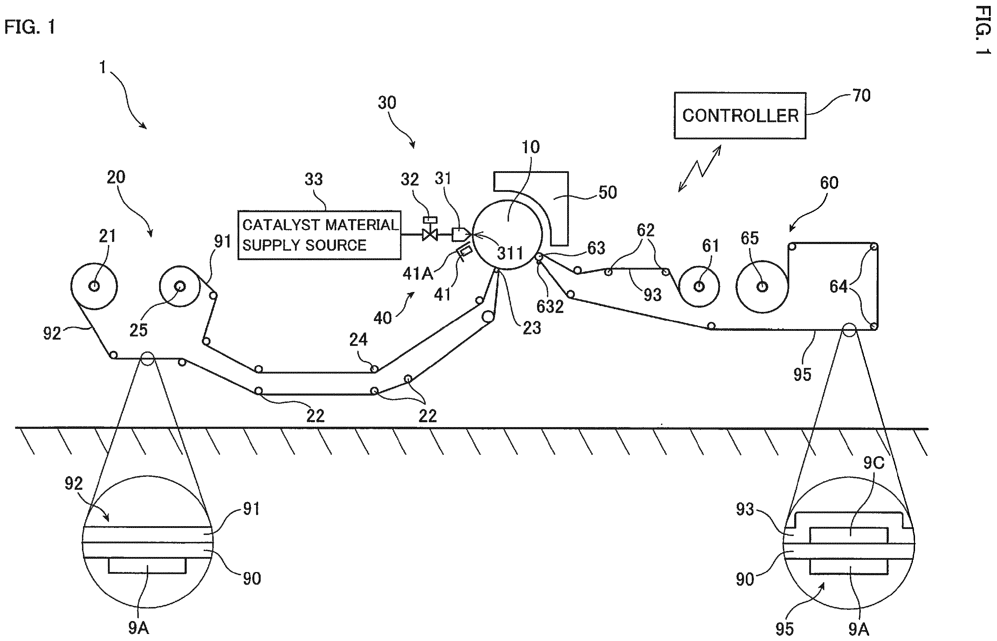

Fig. 1 is a diagrammatic view showing a configuration of a catalyst-coated membrane manufacturing apparatus 1 according to the embodiment of the present invention. This manufacturing apparatus 1 is an apparatus used in the process of manufacturing a membrane electrode assembly (MEA) for a polymer electrolyte fuel cell. This manufacturing apparatus 1 forms a catalyst layer on a surface of an electrolyte membrane which is an elongated strip-shaped base material to manufacture a catalyst-coated membrane (CCM).

The catalyst-coated membrane manufacturing apparatus 1 includes a suction roller 10, an electrolyte membrane supply part 20, a coating part 30, a catalyst layer sensing part 40, a drying furnace 50, a catalyst-coated membrane collection part 60, and a controller 70.

The suction roller 10 is a roller that rotates while holding an electrolyte membrane 90 serving as a base material under suction. The suction roller 10 has a cylindrical outer peripheral surface with a plurality of suction holes. The suction roller 10 has a diameter in the range of 200 to 1600 mm, for example. A rotary driver having a driving source such as a motor is connected to the suction roller 10. When the rotary driver is put into operation, the suction roller 10 rotates about a horizontally extending axis. The suction roller 10 is an example of a "transport part" according to the present invention.

Examples of the material of the suction roller 10 used herein include porous materials such as porous carbon or porous ceramics. Specific examples of the porous ceramics include sintered bodies of alumina (Al₂O₃) or silicon carbide (SiC). The porous suction roller 10 has pores with a diameter of not greater than 5 µm, for example, and a porosity in the range of 15% to 50%, for example.

Metal may be used in place of the porous materials as the material of the suction roller 10. Specific examples of the metal include stainless steel or iron. When metal is used as the material of the suction roller 10, minute suction holes may be formed by machining in the outer peripheral surface of the suction roller 10. Preferably, the suction holes have a diameter of not greater than 2 mm for the purpose of preventing the occurrence of suction marks.

The suction roller 10 has an end surface provided with a sucking port not shown. The sucking port is connected to a sucking mechanism (for example, an exhaust pump). When the sucking mechanism is put into operation, a negative pressure (vacuum) is developed in the sucking port of the suction roller 10. A negative pressure is developed also in the suction holes provided in the outer peripheral surface of the suction roller 10 through the pores in the suction roller 10. The electrolyte membrane 90 is transported in the form of an arc by the rotation of the suction roller 10 while being held on the outer peripheral surface of the suction roller 10 under suction by the negative pressure.

The electrolyte membrane supply part 20 supplies a laminated base material 92 to the suction roller 10. The laminated base material 92 is comprised of two layers: the electrolyte membrane 90 and a first support film 91. When supplying the laminated base material 92 to the suction roller 10, the electrolyte membrane supply part 20 separates the first support film 91 from the electrolyte membrane 90. Then, the electrolyte membrane supply part 20 supplies the electrolyte membrane 90 to the suction roller 10 and collects the first support film 91.

For example, a fluorine-based or hydrocarbon-based polymer electrolyte membrane is used as the electrolyte membrane 90. Specific examples of the electrolyte membrane 90 used herein include polymer electrolyte membranes containing perfluorocarbon sulfonic acid (e.g., Nafion^{®} available from DuPont, USA; Flemion^{®} available from Asahi Glass Co., Ltd.; Aciplex^{®} available from Asahi Kasei Corporation; and Goreselect^{®} available from W. L. Gore & Associates, Inc.). The electrolyte membrane 90 has a thickness in the range of 5 to 30 µm, for example. The electrolyte membrane 90 swells when exposed to moisture in the atmosphere, and shrinks when the humidity of the atmosphere is decreased. That is, the electrolyte membrane 90 has the property of being easily deformable depending on the humidity of the atmosphere.

The first support film 91 is a film for suppressing the deformation of the electrolyte membrane 90. Resins having a mechanical strength higher than that of the electrolyte membrane 90 and excellent in shape retaining function are used as the material of the first support film 91. Specific examples of the first support film 91 include films made of PEN (polyethylene naphthalate) or PET (polyethylene terephthalate). The first support film 91 has a thickness in the range of 25 to 100 µm, for example.

The electrolyte membrane supply part 20 includes a laminated base material supply roller 21, a plurality of laminated base material carrying-in rollers 22, a separation roller 23, a plurality of first support film carrying-out rollers 24, and a first support film collection roller 25. The laminated base material supply roller 21, the plurality of laminated base material carrying-in rollers 22, the separation roller 23, the plurality of first support film carrying-out rollers 24, and the first support film collection roller 25 are disposed parallel to the suction roller 10.

The laminated base material 92, with the first support film 91 positioned inside, is wound on the laminated base material supply roller 21. In the present embodiment, catalyst layers (referred to hereinafter as "first catalyst layers 9A") are previously formed on a surface (referred to hereinafter as a "first surface") of the electrolyte membrane 90 which is opposite the first support film 91. The first catalyst layers 9A are formed in an apparatus different from the manufacturing apparatus 1 by intermittently coating the first surface of the electrolyte membrane 90 with a catalyst material and then drying the catalyst material.

The laminated base material supply roller 21 is rotated by the power of a motor not shown. As the laminated base material supply roller 21 rotates, the laminated base material 92 is unwound from the laminated base material supply roller 21. The unwound laminated base material 92 is transported along a predetermined carrying-in path to the separation roller 23 while being guided by the laminated base material carrying-in rollers 22.

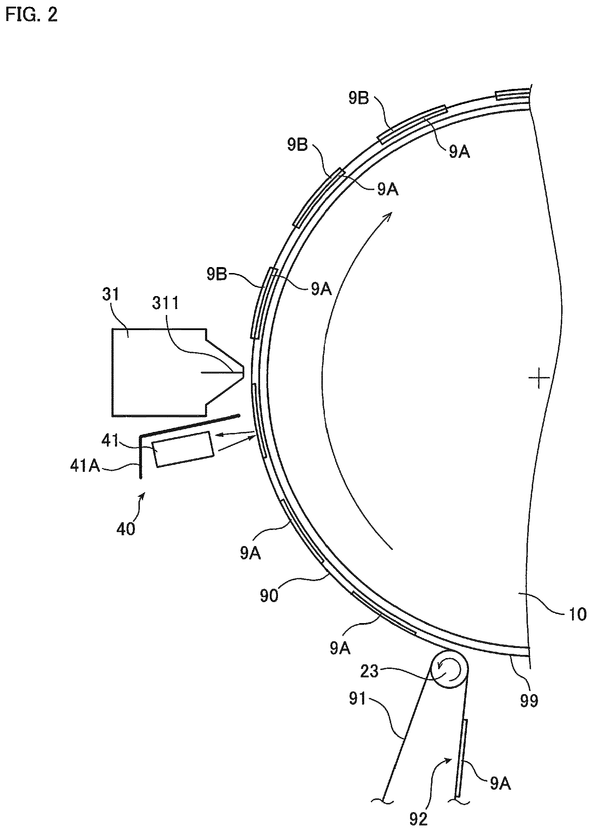

Fig. 2 is an enlarged view of the suction roller 10 and its surroundings.

The separation roller 23 is a roller for separating the first support film 91 from the electrolyte membrane 90. The separation roller 23 has a cylindrical outer peripheral surface with a diameter smaller than that of the suction roller 10. At least the outer peripheral surface of the separation roller 23 is made of an elastic body. The separation roller 23 is pressurized toward the suction roller 10 by an air cylinder not shown.

The laminated base material 92 transported by the laminated base material carrying-in rollers 22 is introduced to between the suction roller 10 and the separation roller 23. A porous base material 99 is supplied to the suction roller 10 at a position upstream as seen in the direction of rotation of the suction roller 10. The porous base material 99 is transported in the form of an arc by the rotation of the suction roller 10 while being held on the outer peripheral surface of the suction roller 10 under suction. The first surface of the electrolyte membrane 90 of the laminated base material 92 introduced to between the suction roller 10 and the separation roller 23 together with the first catalyst layers 9A comes in contact with a surface of the porous base material 99 held on the suction roller 10. The first support film 91 of the laminated base material 92 comes in contact with the outer peripheral surface of the separation roller 23. For ease of understanding, the suction roller 10 and the porous base material 99 are shown in Fig. 2 as spaced apart from each other, and the porous base material 99 and the electrolyte membrane 90 are shown in Fig. 2 as spaced apart from each other. The porous base material 99 and its associated parts are not shown in Fig. 1.

In this state, the laminated base material 92 is pressed toward the suction roller 10 by the pressure received from the separation roller 23. A sucking force from the suction roller 10 develops a negative pressure on the surface of the porous base material 99 held on the suction roller 10. The electrolyte membrane 90 is suctioned onto the surface of the porous base material 99 by the negative pressure. The electrolyte membrane 90 together with the porous base material 99 is transported in the form of an arc by the rotation of the suction roller 10 while being held on the suction roller 10. On the other hand, the first support film 91 is separated from the electrolyte membrane 90. As a result, a surface (referred to hereinafter as a "second surface") of the electrolyte membrane 90 which is opposite the first surface held by the suction roller 10 is exposed.

In the present embodiment, the porous base material 99 is interposed between the outer peripheral surface of the suction roller 10 and the electrolyte membrane 90 in this manner. Thus, there is no direct contact between the outer peripheral surface of the suction roller 10 and the first catalyst layers 9A formed on the first surface of the electrolyte membrane 90. This prevents part of the first catalyst layers 9A from adhering to the outer peripheral surface of the suction roller 10, and prevents foreign materials from being transferred from the outer peripheral surface of the suction roller 10 to the electrolyte membrane 90.

The porous base material 99 separates from the suction roller 10 and is collected at a position downstream from the catalyst-coated membrane collection part 60 to be described later as seen in the direction of rotation of the suction roller 10.

The first support film 91 separated from the electrolyte membrane 90 is transported toward the plurality of first support film carrying-out rollers 24. The first support film 91 is transported along a predetermined carrying-out path to the first support film collection roller 25 while being guided by the plurality of first support film carrying-out rollers 24. The first support film collection roller 25 is rotated by the power of a motor not shown. Thus, the first support film 91 is wound on the first support film collection roller 25.

The coating part 30 is a mechanism for coating the second surface of the electrolyte membrane 90 around the suction roller 10 with a catalyst material serving as a coating liquid. The catalyst material used herein is a catalyst material prepared by dispersing catalyst particles containing platinum (Pt) in a solvent such as alcohol, for example. The coating part 30 includes a nozzle 31, an on-off valve 32, and a catalyst material supply source 33.

The nozzle 31 is provided downstream from the separation roller 23 as seen in a direction (transport direction) in which the electrolyte membrane 90 is transported by the suction roller 10. The nozzle 31 has an ejection orifice 311 opposed to the outer peripheral surface of the suction roller 10. The ejection orifice 311 is a slit-shaped opening extending in the width direction of the suction roller 10 along the outer peripheral surface of the suction roller 10. The nozzle 31 forms a liquid pool of the catalyst material at the tip of the ejection orifice 311. Then, the liquid pool is brought into contact with each to-be-coated region of the second surface of the electrolyte membrane 90 transported by the outer peripheral surface of the suction roller 10. Thus, the to-be-coated regions of the second surface of the electrolyte membrane 90 are coated with the catalyst material, so that wet films 9B of the catalyst material are formed. The wet films 9B are dried by the drying furnace 50 to be described later to become catalyst layers (referred to hereinafter as "second catalyst layers 9C").

The to-be-coated regions are detected by the catalyst layer sensing part 40 disposed upstream from the nozzle 31 as seen in the transport direction. The to-be-coated regions are regions that coincide with the first catalyst layers 9A formed on the first surface of the electrolyte membrane 90. That is, the first catalyst layers 9A and the second catalyst layers 9C are formed in coincident positions. In other words, the catalyst layer sensing part 40 detects a plurality of coating film regions in which the wet films 9B that are coating films are to be formed so as to be arranged in a longitudinal direction.

The on-off valve 32 causes the nozzle 31 to perform or stop the operation of ejecting the catalyst material. The on-off valve 32 is interposed in a supplying pipe which connects the nozzle 31 and the catalyst material supply source 33 to each other. When the on-off valve 32 is opened, the catalyst material is supplied from the catalyst material supply source 33 to the nozzle 31. Then, a liquid pool of the catalyst material is formed at the tip of the ejection orifice 311. This allows the nozzle 31 to perform the operation of ejecting the catalyst material. On the other hand, when the on-off valve 32 is closed, the supply of the catalyst material to the nozzle 31 is stopped. This stops the formation of a liquid pool of the catalyst material at the tip of the ejection orifice 311 to cause the nozzle 31 to stop the operation of ejecting the catalyst material.

A material that causes a fuel cell reaction to occur in the anode or cathode of a polymer fuel cell is used for the catalyst particles in the catalyst material. Specifically, particles of platinum (Pt), a platinum alloy, a platinum compound, or the like may be used as the catalyst particles. Examples of the platinum alloy used herein include alloys of platinum and at least one metal selected from the group consisting of ruthenium (Ru), palladium (Pd), nickel (Ni), molybdenum (Mo), iridium (Ir), iron (Fe) and the like. In general, platinum is used as the catalyst material for the cathode, and the platinum alloy is used as the catalyst material for the anode. The catalyst material ejected from the nozzle 31 may be for the cathode or for the anode. It should be noted that catalyst materials of polarities opposite from each other are used for the first catalyst layers 9A and the second catalyst layers 9C formed respectively on the first and second surfaces of the electrolyte membrane 90.

The catalyst layer sensing part 40 is disposed at a position opposed to the outer peripheral surface of the suction roller 10 and upstream from the coating part 30 as seen in the direction of rotation of the suction roller 10. The catalyst layer sensing part 40 detects the to-be-coated regions on the second surface of the electrolyte membrane 90 which are to be coated with the catalyst material by the coating part 30. As mentioned above, the to-be-coated regions are regions that coincide with the first catalyst layers 9A. The catalyst layer sensing part 40 detects the first catalyst layers 9A formed on the first surface of the electrolyte membrane 90 from the second surface side of the electrolyte membrane 90 transported by the suction roller 10 to thereby detect the to-be-coated regions.

The catalyst layer sensing part 40 includes a fiber sensor 41. The fiber sensor 41 is connected through an optical fiber not shown to an optical measurement device. The optical measurement device includes a light source and a light receiving part. Light emitted from the light source of the optical measurement device is transmitted through the optical fiber to the fiber sensor 41. The fiber sensor 41 directs the light transmitted through the optical fiber toward the second surface of the electrolyte membrane 90. The fiber sensor 41 receives light reflected from the second surface of the electrolyte membrane 90 to cause the received light to enter the light receiving part of the optical measurement device through the optical fiber. Then, the presence of an object is detected in the optical measurement device, based on the entering light.

The electrolyte membrane 90 is transparent in the present embodiment. The first catalyst layers 9A have a color with a high absorption coefficient, such as black. In this case, the light coming from the fiber sensor 41 is transmitted through the electrolyte membrane 90. Then, when any one of the first catalyst layers 9A is present in a location toward which the light is directed, most of the light transmitted through the electrolyte membrane 90 is absorbed by the one first catalyst layer 9A. On the other hand, when the first catalyst layers 9A are absent in the location toward which the light is directed, the light transmitted through the electrolyte membrane 90 is not absorbed but is reflected from other parts (e.g., the outer peripheral surface of the suction roller 10). In other words, the amount of reflected light received by the fiber sensor 41 varies depending on whether or not any one of the first catalyst layers 9A is present in the location toward which the light is directed. The catalyst layer sensing part 40 detects the presence of the first catalyst layers 9A, based on such a difference in the amount of light.

In this manner, the catalyst layer sensing part 40 is capable of detecting the first catalyst layers 9A formed on the first surface of the electrolyte membrane 90 from the second surface side of the electrolyte membrane 90. The use of the fiber sensor 41 for light irradiation enables the placement of the catalyst layer sensing part 40 even in the case where sufficient space cannot be provided.

The fiber sensor 41 is disposed in proximity to the nozzle 31 of the coating part 30. By starting the coating immediately after the catalyst layer sensing part 40 detects the to-be-coated regions, the detected to-be-coated regions are coated with the catalyst material. That is, it is unnecessary to transport the electrolyte membrane 90 for the purpose of only detecting the coating position. As a result, this prevents a region in which the wet films 9B are not formed from being produced on the electrolyte membrane 90. A relationship between the timing of detection of the to-be-coated regions by means of the catalyst layer sensing part 40 and the timing of coating start by means of the coating part 30 will be described later.

A sensor cover (detection part cover) 41A is provided between the fiber sensor 41 and the nozzle 31. The fiber sensor 41 is disposed in proximity to the nozzle 31. The sensor cover 41A prevents the catalyst material from the nozzle 31 from adhering to the fiber sensor 41.

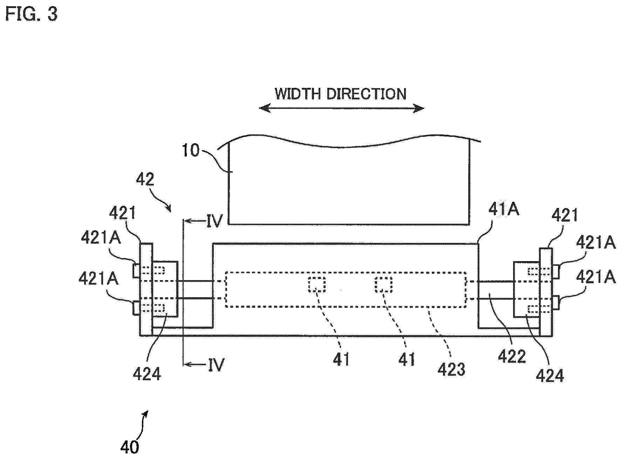

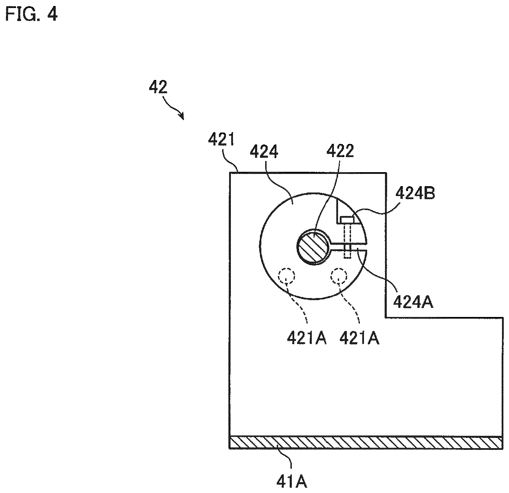

The catalyst layer sensing part 40 includes an angle adjusting mechanism 42 for adjusting the irradiation angle of the fiber sensor 41. Fig. 3 is a plan view of the angle adjusting mechanism 42. Fig. 4 is a sectional view taken along the line IV-IV of Fig. 3.

As shown in Fig. 3, the catalyst layer sensing part 40 according to the present embodiment includes two fiber sensors 41. The two fiber sensors 41 are disposed in spaced apart relation in the width direction of the suction roller 10. That is, the catalyst layer sensing part 40 detects the to-be-coated regions at two points arranged in the width direction of the suction roller 10. This provides an improvement in detection accuracy of the to-be-coated regions by means of the catalyst layer sensing part 40 over the provision of a single fiber sensor 41.

The angle adjusting mechanism 42 includes a pair of fixed brackets 421. The two fixed brackets 421 are disposed in opposed relation outside the outer peripheral surface of the suction roller 10 and are spaced a distance greater than the width of the suction roller 10 apart from each other. The sensor cover 41A and a rotary shaft 422 are provided between the two fixed brackets 421.

The rotary shaft 422 has a cylindrical shape and extends in the width direction of the suction roller 10. The rotary shaft 422 is rotatably supported by the pair of fixed brackets 421. A fixing member 423 for fixing the two fiber sensors 41 is provided on the rotary shaft 422 in a position opposed to the outer peripheral surface of the suction roller 10. The fixing member 423 rotates together with the rotary shaft 422.

The rotary shaft 422 rotatable with respect to the pair of fixed brackets 421 is fastened by split collars 424 to thereby be fixed to the fixed brackets 421. The split collars 424 and the fixed brackets 421 are fixed to each other with bolts 421A.

The split collars 424 have a cylindrical shape with a cylindrical cavity extending in an axial direction thereof. Each of the split collars 424 has a cutout 424A in part of a circumferential portion thereof to have a C-shaped configuration as seen in the axial direction in plan view. The cavity of each of the split collars 424 has a diameter smaller than that of the rotary shaft 422. The rotary shaft 422 is insertable into the cavity of each of the split collars 424, with the cutout 424A widened. With the rotary shaft 422 inserted in the cavity of each of the split collars 424, a bolt 424B is tightened so as to narrow the cutout 424A, whereby the rotary shaft 422 is fixed to each of the split collars 424.

In the angle adjusting mechanism 42 thus configured, the rotary shaft 422 rotates with respect to the pair of fixed brackets 421 by loosening (or removing) the bolts 421A and 424B. As the rotary shaft 422 rotates, the two fiber sensors 41 fixed to the fixing member 423 also rotate. Thus, the irradiation angle of the two fiber sensors 41 is adjustable. After the adjustment, the bolts 421A and 424B are tightened and fixed to the fixed brackets 421, whereby the two fiber sensors 41 are maintained at a desired irradiation angle.

This angle adjusting mechanism 42 adjusts the irradiation angle of the fiber sensors 41, depending on the first catalyst layers 9A, to achieve the detection of the to-be-coated regions with higher reliability. For example, when the first catalyst layers 9A are black in color as mentioned above, the amount of reflected light varies greatly depending on whether or not the first catalyst layers 9A are present in the location toward which the light is directed, whereby the first catalyst layers 9A are detected.

On the other hand, when the first catalyst layers 9A are transparent as well as the electrolyte membrane 90, the amount of reflected light varies slightly, so that it is difficult to detect the first catalyst layers 9A. For example, if the irradiation angle of the fiber sensors 41 is a right angle to the first catalyst layers 9A, the reflected light is scattered in small amounts. As a result, a large amount of reflected light is received by the fiber sensors 41 regardless of the irradiation position, so that the amount of reflected light varies slightly as a whole.

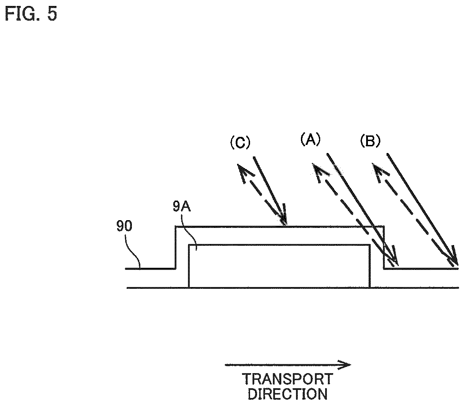

The irradiation angle of the fiber sensors 41 is hence adjusted so that irradiation light intersects an end portion of each of the first catalyst layers 9A, as indicated by a pattern (A) in Fig. 5. Fig. 5 is a view for illustrating an optimum irradiation angle of the fiber sensors 41 with respect to the transparent first catalyst layers 9A. In Fig. 5, solid arrows indicate irradiation light, and dashed arrows indicate reflected light. The pattern (A), a pattern (B), and a pattern (C) differ from each other in the state of reflection. In this case, the amount of reflected light received by the fiber sensors 41 increases in the order of the pattern (B), the pattern (A), and the pattern (C) due to a difference in the amount of scattered reflected light. Based on such a difference in the amount of reflected light, the catalyst layer sensing part 40 is capable of detecting the to-be-coated regions. In this manner, the sensing accuracy of the to-be-coated regions is improved by adjusting the irradiation angle of the fiber sensors 41.

Referring again to Fig. 1, the drying furnace 50 is a section for drying the wet films 9B formed on the second surface of the electrolyte membrane 90. The drying furnace 50 is disposed downstream from the coating part 30 as seen in the direction in which the electrolyte membrane 90 is transported by the suction roller 10. The drying furnace 50 is provided in the form of an arc along the outer peripheral surface of the suction roller 10. The drying furnace 50 blows heated gases (hot gases) toward the second surface of the electrolyte membrane 90 around the suction roller 10. Thus, the wet films 9B formed on the second surface of the electrolyte membrane 90 are heated, so that the solvent in the catalyst material is vaporized. This dries the wet films 9B to form the second catalyst layers 9C on the second surface of the electrolyte membrane 90. As a result, a catalyst-coated membrane 95 comprised of the electrolyte membrane 90, the first catalyst layers 9A, and the second catalyst layers 9C is provided.

The catalyst-coated membrane collection part 60 is a section for affixing a second support film 93 to the catalyst-coated membrane 95 to collect the catalyst-coated membrane 95. The catalyst-coated membrane collection part 60 includes a second support film supply roller 61, a plurality of second support film carrying-in rollers 62, a laminating roller 63, a plurality of catalyst-coated membrane carrying-out rollers 64, and a catalyst-coated membrane collection roller 65. The second support film supply roller 61, the plurality of second support film carrying-in rollers 62, the laminating roller 63, the plurality of catalyst-coated membrane carrying-out rollers 64, and the catalyst-coated membrane collection roller 65 are disposed parallel to the suction roller 10.

The second support film 93 is wound on the second support film supply roller 61. The second support film supply roller 61 is rotated by the power of a motor not shown. As the second support film supply roller 61 rotates, the second support film 93 is unwound from the second support film supply roller 61. The unwound second support film 93 is transported along a predetermined carrying-in path to the laminating roller 63 while being guided by the second support film carrying-in rollers 62.

Resins having a mechanical strength higher than that of the electrolyte membrane 90 and excellent in shape retaining function are used as the material of the second support film 93. Specific examples of the second support film 93 include films made of PEN (polyethylene naphthalate) or PET (polyethylene terephthalate). The second support film 93 has a thickness in the range of 25 to 100 µm, for example. The second support film 93 may be the same film as the first support film 91. Also, the first support film 91 wound on the first support film collection roller 25 may be unwound as the second support film 93 from the second support film supply roller 61.

The laminating roller 63 is a roller for affixing the second support film 93 to the catalyst-coated membrane 95. An example of the material of the laminating roller 63 used herein includes rubber having high heat resistance. The laminating roller 63 has a cylindrical outer peripheral surface smaller in diameter than the suction roller 10. The laminating roller 63 is disposed adjacent to the suction roller 10 and downstream from the drying furnace 50 as seen in the direction of rotation of the suction roller 10. The laminating roller 63 is pressurized toward the suction roller 10 by an air cylinder not shown.

The second support film 93 transported by the second support film carrying-in rollers 62 is introduced to between the catalyst-coated membrane 95 transported around the suction roller 10 and the laminating roller 63. At this time, the second support film 93 is pressed against the catalyst-coated membrane 95 by the pressure received from the laminating roller 63, and is heated by the heat of the laminating roller 63. As a result, the second support film 93 is affixed to the second surface of the electrolyte membrane 90. The second catalyst layers 9C formed on the second surface of the electrolyte membrane 90 are sandwiched between the electrolyte membrane 90 and the second support film 93.

The catalyst-coated membrane 95 with the second support film 93 having passed between the suction roller 10 and the laminating roller 63 is transported away from the suction roller 10. Thus, the catalyst-coated membrane 95 is separated from the porous base material 99.

In the present embodiment, a pressure roller 632 is disposed near the laminating roller 63. The pressure roller 632 is disposed adjacent to the laminating roller 63 and downstream from a gap between the suction roller 10 and the laminating roller 63 as seen in the transport direction of the catalyst-coated membrane 95. The pressure roller 632 is pressurized toward the laminating roller 63 by an air cylinder not shown. The catalyst-coated membrane 95 with the second support film 93 separated from the porous base material 99 subsequently passes between the laminating roller 63 and the pressure roller 632. This improves the adherence of the second support film 93 to the second surface of the electrolyte membrane 90.

Thereafter, the catalyst-coated membrane 95 with the second support film 93 is transported along a predetermined carrying-out path to the catalyst-coated membrane collection roller 65 while being guided by the catalyst-coated membrane carrying-out rollers 64. The catalyst-coated membrane collection roller 65 is rotated by the power of a motor not shown. Thus, the catalyst-coated membrane 95 with the second support film 93 is wound on the catalyst-coated membrane collection roller 65, with the second support film 93 positioned outside.

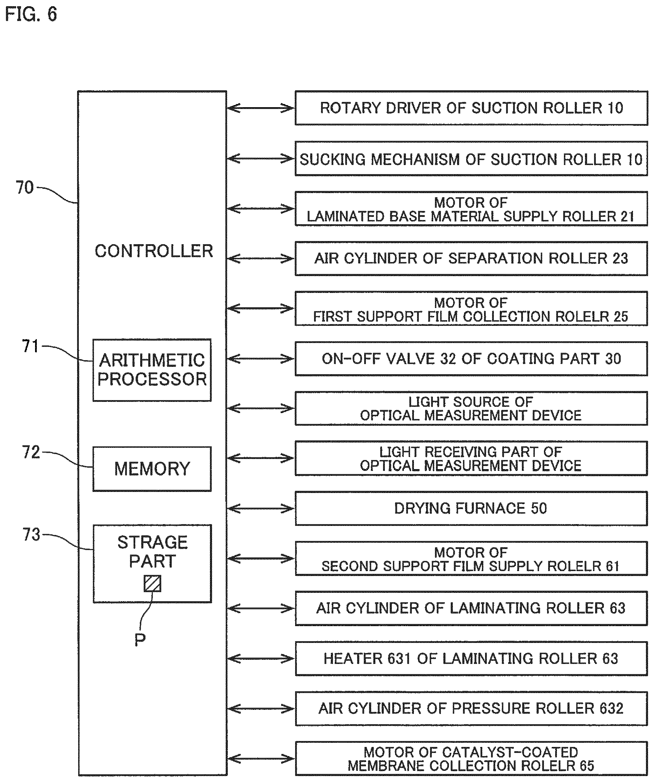

The controller 70 is a means for controlling the operations of the components in the manufacturing apparatus 1. Fig. 6 is a block diagram showing connections between the controller 70 and the components in the manufacturing apparatus 1. As conceptually shown in Fig. 6, the controller 70 is formed by a computer including an arithmetic processor 71 such as a CPU, a memory 72 such as a RAM, and a storage part 73 such as a hard disk drive. A computer program P for executing the process of manufacturing the catalyst-coated membrane is installed in the storage part 73.

As shown in Fig. 6, the controller 70 is connected to the rotary driver of the aforementioned suction roller 10, the sucking mechanism of the suction roller 10, the motor of the laminated base material supply roller 21, the air cylinder of the separation roller 23, the motor of the first support film collection roller 25, the on-off valve 32 of the coating part 30, the light source and the light receiving part of the optical measurement device of the catalyst layer sensing part 40, the drying furnace 50, the motor of the second support film supply roller 61, the air cylinder of the laminating roller 63, a heater 631 of the laminating roller 63, the air cylinder of the pressure roller 632, and the motor of the catalyst-coated membrane collection roller 65 for communication therewith.

The controller 70 temporarily reads the computer program P and data that are stored in the storage part 73 onto the memory 72, and the arithmetic processor 71 performs arithmetic processing based on the computer program P, so that the controller 70 controls the operations of the aforementioned components. Thus, the process of manufacturing the catalyst-coated membrane in the manufacturing apparatus 1 proceeds.

### <2. Detection and Coating of To-Be-Coated Regions>

### <2.1. Arrangement of Nozzle 31 and Fiber Sensor 41>

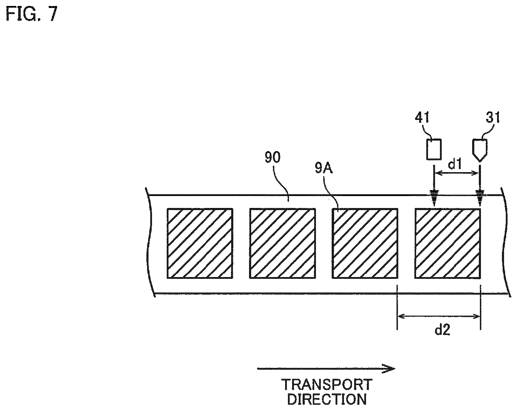

Fig. 7 is a view for illustrating a positional relationship between the nozzle 31 and the fiber sensor 41. Fig. 7 is a view of the electrolyte membrane 90 held by the suction roller 10 as seen from the second surface side. In the following description, one end of each of the first catalyst layers 9A which is downstream as seen in the transport direction is referred to as a "leading edge", and the other end of each of the first catalyst layers 9A which is upstream as seen in the transport direction is referred to as a "trailing edge".

A distance between a coating position at which the nozzle 31 applies a coating of the catalyst material and a light irradiation position at which the fiber sensor 41 performs light irradiation is designated by the reference character d1. A distance between the leading edge of one of the first catalyst layers 9A which is downstream as seen in the transport direction and the leading edge of another of the first catalyst layers 9A which is adjacent to the one first catalyst layer 9A as seen in the transport direction is designated by the reference character d2. In this case, the nozzle 31 and the fiber sensor 41 are arranged so as to satisfy the following relationship: d1 < d2.

### <2.2. Coating Timing of Catalyst Material>

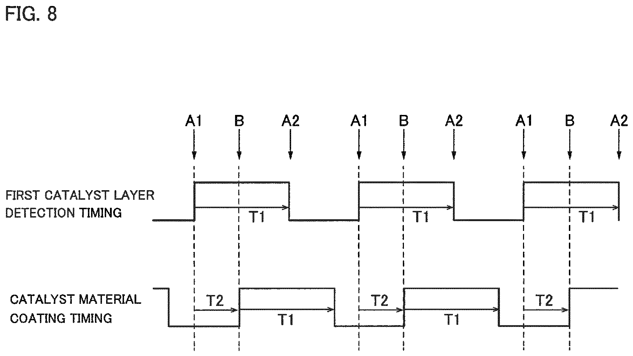

Fig. 8 is a timing diagram for illustrating the detection timing of the first catalyst layers 9A and the coating timing of the catalyst material.

A time A1 shown in Fig. 8 is the time at which the catalyst layer sensing part 40 detects the leading edge of each of the first catalyst layers 9A. A time A2 shown in Fig. 8 is the time at which the catalyst layer sensing part 40 detects the trailing edge of each of the first catalyst layers 9A. A time period from the time A1 to the time A2 is designated by the reference character T1.

A time B shown in Fig. 8 is the time at which the coating part 30 starts applying a coating of the catalyst material. The coating part 30 starts applying a coating of the catalyst material after a time period T2 (< T1) has elapsed since the time A1. The time period T2 is calculated from the distance d1 and the rotation speed of the suction roller 10. That is, the time period T2 is a time period from the instant at which the leading edge of each of the first catalyst layers 9A formed on the electrolyte membrane 90 being transported passes through the light irradiation position to the instant at which the leading edge reaches the coating position.

The coating part 30 continues applying the coating for the time period T1. As mentioned above, the time period T1 is the time period from the instant at which the catalyst layer sensing part 40 detects the leading edge of each of the first catalyst layers 9A to the instant at which the catalyst layer sensing part 40 detects the trailing edge thereof. In other words, the time period T1 is a time period over which each of the to-be-coated regions is moved in the transport direction. By continuing applying the coating for the time period T1, one to-be-coated region is coated throughout from the leading edge to the trailing edge with the catalyst material. In this manner, the coating process by means of the coating part 30 is facilitated by performing the coating for the same time period as a time period (the time period T1) over which the catalyst layer sensing part 40 detects each of the to-be-coated regions.

The coating part 30 may starts applying the coating when the moving distance of the suction roller 10 converted from the driving pulses of the suction roller 10 from the time A1 reaches the distance d1.

In this manner, the nozzle 31 and the fiber sensor 41 are disposed in proximity to each other, and the coating is started immediately after the detection of a to-be-coated region, whereby the detected to-be-coated region is coated with the catalyst material. That is, it is not necessary to transport the electrolyte membrane 90 for the purpose of only detecting the coating position. As a result, this prevents the electrolyte membrane 90 from being transported while no wet films 9B are formed to thereby prevent a wasteful region from being formed on the electrolyte membrane 90.

### <3. Operation during Coating by means of Coating Part 30>

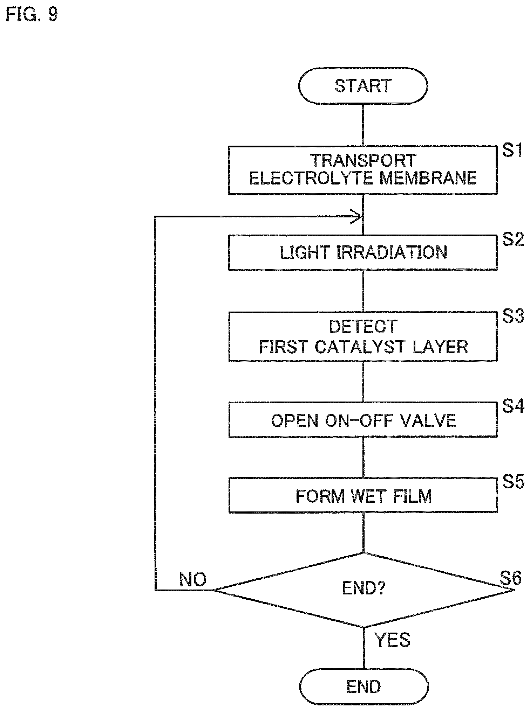

Fig. 9 is a flow diagram showing a procedure during the coating by means of the coating part 30.

While supporting the electrolyte membrane 90, the suction roller 10 rotates to transport the electrolyte membrane 90 at a predetermined transport speed in the transport direction (Step S1). Next, while the transport of the electrolyte membrane 90 continues, the fiber sensor 41 of the catalyst layer sensing part 40 performs light irradiation (Step S2). The catalyst layer sensing part 40 receives reflected light to detect one first catalyst layer 9A (Step S3). Specifically, the catalyst layer sensing part 40 detects the leading edge of one first catalyst layer 9A.

Upon detecting the leading edge of the first catalyst layer 9A, the coating part 30 opens the on-off valve 32 (Step S4) to start applying a coating of the catalyst material, thereby forming one wet film 9B (Step S5). In Step S5, the coating part 30 starts applying a coating of the catalyst material after the time period T2 has elapsed since the catalyst layer sensing part 40 detected the leading edge of the first catalyst layer 9A in Step S3. Then, the coating part 30 continues applying the coating of the catalyst material for the time period T1. Thus, the coating of the catalyst material is applied to one to-be-coated region lying on the second surface of the electrolyte membrane 90 and coinciding with the first catalyst layer 9A to form the wet film 9B.

If the coating process is to be ended (YES in Step S6), the procedure is ended. If the coating process is not to be ended (NO in Step S6), the process in Step S2 is performed. Examples of the case in which the coating process is to be ended include the case in which the manufacturing apparatus 1 stops the manufacture and the case in which the transport of the electrolyte membrane 90 is to be stopped.

Although the principal embodiment according to the present invention has been described hereinabove, the configuration of the details of the manufacturing apparatus 1 may differ from that shown in the figures of the present invention.

For example, the catalyst-coated membrane manufacturing apparatus 1 according to the aforementioned embodiment is configured to apply a coating of the catalyst material to the second surface of the electrolyte membrane 90 opposite the first surface on which the first catalyst layers 9A are formed. The present invention, however, is not limited to this. As an example, the catalyst-coated membrane manufacturing apparatus may be configured to apply a coating of the catalyst material onto the first catalyst layers 9A. More specifically, the first catalyst layers 9A are formed on the second surface of the electrolyte membrane 90. The catalyst layer sensing part 40 senses the first catalyst layers 9A formed on the second surface of the electrolyte membrane 90 as the to-be-coated regions. Then, the coating part 30 coats the to-be-coated regions on the second surface of the electrolyte membrane 90 with the catalyst material.

Also, frames are formed on the electrolyte membrane 90, and the catalyst-coated membrane manufacturing apparatus may be configured to apply a coating of the catalyst material into the frames. In this case, the catalyst layer sensing part 40 senses the inside of the frames on the electrolyte membrane 90 as the to-be-coated regions. Then, the coating part 30 coats the inside of the frames with the catalyst material.

### Reference Signs List

- 1: Catalyst-coated membrane manufacturing apparatus
- 9A: First catalyst layers
- 9B: Wet films
- 9C: Second catalyst layers
- 10: Suction roller
- 30: Coating part
- 31: Nozzle
- 40: Catalyst layer sensing part
- 41: Fiber sensor
- 41A: Sensor cover (detection part cover)
- 42: Angle adjusting mechanism
- 50: Drying furnace
- 70: Controller
- 71: Arithmetic processor
- 72: Memory
- 73: Storage part
- 90: Electrolyte membrane
- 91: First support film
- 92: Laminated base material
- 93: Second support film
- 95: Catalyst-coated membrane
- 311: Ejection orifice
- 421: Fixed brackets
- 422: Rotary shaft
- 423: Fixing member
- 424: Split collars

## Claims

1. A coating apparatus comprising:
a transport part (10) for transporting an elongated strip-shaped base material (90) in a longitudinal direction, said base material (90) including a plurality of to-be-coated regions arranged in said longitudinal direction, said to-be-coated regions being regions in which coating films are to be formed so as to be arranged in said longitudinal direction, said base material (90) having a first surface and a second surface;
a detection part (40) for detecting said to-be-coated regions through the use of irradiation with light toward said second surface of said base material (90), based on a difference in the amount of reflected light; and
a coating part (30) disposed downstream from said detection part (40) as seen in a transport direction and for coating said to-be-coated regions of said second surface detected by said detection part (40) with a coating liquid,
wherein said light irradiated from said detection part (40) to said second surface of said base material (90) can transmit through said base material (90),
wherein said detection part (40) is configured to detect a leading edge of each of said to-be-coated regions which is downstream as seen in said transport direction,
wherein said coating part (30) is configured to start applying a coating of said coating liquid in response to timing of detection of the leading edge of each of said to-be-coated regions by means of said detection part (40), and
wherein a distance between the position of coating by means of said coating part (30) and the position of light irradiation by means of said detection part (40) is shorter than a distance between leading edges of two adjacent ones of said to-be-coated regions which are contiguous in said transport direction,
wherein said to-be-coated regions coincide with a first catalyst layers (9A) formed on said first surface,
**characterized in that**
said detection part (40) is capable of adjusting the irradiation angle of light at an angle to said first catalyst layer so as to increase the change in the amount of reflected light, wherein said transport part (10) includes a roller (10) rotating while holding said base material (90) on an outer peripheral surface thereof,
wherein said detection part (40) is configured to irradiate said base material (90) held on the outer peripheral surface of said roller (10) with light,
wherein said coating part (30) is configured to coat said base material (90) held on the outer peripheral surface of said roller (10) with the coating liquid, and
wherein said base material (90) is transparent and said first catalyst layer (9A) has a color with a high absorption coefficient.

2. The coating apparatus according to Claim 1,
wherein said detection part (40) is configured to detect the to-be-coated regions at a plurality of positions arranged in a width direction of said base material (90).

3. The coating apparatus according to any one of Claims 1 to 2, further comprising a detection part cover (41A) provided between said coating part (30) and said detection part (40).

4. The coating apparatus according to any one of Claims 1 to 3,
wherein said detection part (40) is configured to receive light reflected from said to-be-coated regions to thereby detect said to-be-coated regions, and
wherein said coating part (30) is configured to apply a coating of the coating liquid for a time period equal to the time period over which said detection part (40) detects each of the to be coated regions by said reflected light.

5. The coating apparatus according to any one of Claims 1 to 4,
wherein said detection part (40) includes a fiber sensor (41).

6. A method of coating comprising the steps of:
a) transporting an elongated strip-shaped base material (90) in a longitudinal direction, said base material (90) including a plurality of to-be-coated regions arranged in said longitudinal direction, said to-be-coated regions being regions in which coating films are to be formed so as to be arranged in said longitudinal direction, said base material (90) having a first surface and a second surface;
b) detecting said to-be-coated regions by means of a detection part (40) through the use of irradiation with light toward said second surface of said base material (90),
based on a difference in the amount of reflected light; and
c) coating said to-be-coated regions of said second surface detected by said detection part (40) with a coating liquid by means of a coating part (30) at a position downstream from said detection part (40) as seen in a transport direction,
wherein said light irradiated from said detection part (40) to said second surface of said base material (90) can transmit through said base material (90),
wherein a leading edge of each of said to-be-coated regions which is downstream as seen in said transport direction is detected in said step b), wherein applying a coating of said coating liquid is started in said step c) in response to
timing of detection of the leading edge of each of said to-be-coated regions in said step b), and wherein a distance between the position of coating by means of said coating part (30) and the position of light irradiation by means of said detection part (40) is shorter than a distance between leading edges of two adjacent ones of said to-be-coated regions which are contiguous in said transport direction,
wherein said to-be-coated regions coincide with a first catalyst layers (9A) formed on said first surface, **characterized by**
further comprising the step of adjusting the irradiation angle of said light of said step b) at an angle to said first catalyst layer so as to increase the change in the amount of reflected light,
wherein said step a) includes transporting said base material using a roller (10) rotating while holding said base material (90) on an outer peripheral surface thereof,
wherein said step b) includes irradiating said base material (90) held on the outer peripheral surface of said roller (10) with light,
wherein said step c) includes coating said base material (90) held on the outer peripheral surface of said roller (10) with the coating liquid, and
wherein said base material (90) is transparent and said first catalyst layer (9A) has a color with a high absorption coefficient.

## Patentansprüche

1. Beschichtungsvorrichtung, umfassend:
einen Transportteil (10) zum Transportieren eines länglichen streifenförmigen Basismaterials (90) in einer Längsrichtung, wobei das Basismaterial (90) eine Vielzahl von zu beschichtenden Bereichen umfasst, die in der Längsrichtung angeordnet sind, wobei die zu beschichtenden Bereiche Bereiche sind, in denen Beschichtungsfilme zu bilden sind, um in der Längsrichtung angeordnet zu sein, wobei das Basismaterial (90) eine erste Oberfläche und eine zweite Oberfläche aufweist;
einen Detektionsteil (40) zum Detektieren der zu beschichtenden Bereiche durch die Verwendung von Bestrahlung mit Licht in Richtung der zweiten Oberfläche des Basismaterials (90), basierend auf einer Differenz in der reflektierten Lichtmenge; und
einen Beschichtungsteil (30), der in einer Transportrichtung gesehen stromabwärts von dem Detektionsteil (40) angeordnet ist und zum Beschichten der zu beschichtenden Bereiche der zweiten Oberfläche, die durch den Detektionsteil (40) detektiert werden, mit einer Beschichtungsflüssigkeit dient,
wobei das Licht, das von dem Detektionsteil (40) auf die zweite Oberfläche des Basismaterials (90) gestrahlt wird, durch das Basismaterial (90) gehen kann,
wobei der Detektionsteil (40) konfiguriert ist, um eine Vorderkante jedes der zu beschichtenden Bereiche zu detektieren, die in der Transportrichtung gesehen stromabwärts liegt,
wobei der Beschichtungsteil (30) konfiguriert ist, um das Aufbringen einer Beschichtung aus der Beschichtungsflüssigkeit als Reaktion auf den Zeitpunkt der Detektion der Vorderkante jedes der zu beschichtenden Bereiche mittels des Detektionsteils (40) zu starten, und
wobei ein Abstand zwischen der Position der Beschichtung mittels des Beschichtungsteils (30) und der Position der Lichtbestrahlung mittels des Detektionsteils (40) kürzer ist als ein Abstand zwischen Vorderkanten von zwei benachbarten der zu beschichtenden Bereiche, die in der Transportrichtung aneinandergrenzen,
wobei die zu beschichtenden Bereiche mit einer ersten Katalysatorschicht (9A) zusammenfallen, die auf der ersten Oberfläche gebildet ist,
**dadurch gekennzeichnet, dass** der Detektionsteil (40) in der Lage ist, den Bestrahlungswinkel von Licht in einem Winkel zu der ersten Katalysatorschicht einzustellen, um die Änderung der reflektierten Lichtmenge zu erhöhen,
wobei der Transportteil (10) eine Walze (10) umfasst, die sich dreht, während sie das Basismaterial (90) auf einer Außenumfangsfläche davon hält,
wobei der Detektionsteil (40) konfiguriert ist, um das Basismaterial (90), das auf der Außenumfangsfläche der Walze (10) gehalten wird,
mit Licht zu bestrahlen,
wobei der Beschichtungsteil (30) konfiguriert ist, um das Basismaterial (90), das auf der Außenumfangsfläche gehalten wird, mit der Beschichtungsflüssigkeit zu beschichten, und wobei das Basismaterial (90) transparent ist und die erste Katalysatorschicht (9A) eine Farbe mit einem hohen Absorptionskoeffizienten aufweist.

2. Beschichtungsvorrichtung nach Anspruch 1,
wobei der Detektionsteil (40) konfiguriert ist, um die zu beschichtenden Bereiche an einer Vielzahl von Positionen zu detektieren, die in einer Breitenrichtung des Basismaterials (90) angeordnet sind.

3. Beschichtungsvorrichtung nach einem der Ansprüche 1 bis 2, ferner umfassend eine Detektionsteilabdeckung (41A), die zwischen dem Beschichtungsteil (30) und dem Detektionsteil (40) vorgesehen ist.

4. Beschichtungsvorrichtung nach einem der Ansprüche 1 bis 3,
wobei der Detektionsteil (40) konfiguriert ist, um Licht zu empfangen, das von den zu beschichtenden Bereichen reflektiert wird, um dadurch die zu beschichtenden Bereiche zu detektieren, und
wobei der Beschichtungsteil (30) konfiguriert ist, um eine Beschichtung aus der Beschichtungsflüssigkeit für einen Zeitraum aufzubringen, der gleich dem Zeitraum ist, über den der Detektionsteil (40) jeden der zu beschichtenden Bereiche durch das reflektierte Licht detektiert.

5. Beschichtungsvorrichtung nach einem der Ansprüche 1 bis 4,
wobei der Detektionsteil (40) einen Fasersensor (41) umfasst.

6. Beschichtungsverfahren, umfassend die folgenden Schritte:
a) Transportieren eines länglichen streifenförmigen Basismaterials (90) in einer Längsrichtung, wobei das Basismaterial (90) eine Vielzahl von zu beschichtenden Bereichen umfasst, die in der Längsrichtung angeordnet sind, wobei die zu beschichtenden Bereiche Bereiche sind, in denen Beschichtungsfilme zu bilden sind, um in der Längsrichtung angeordnet zu sein, wobei das Basismaterial (90) eine erste Oberfläche und eine zweite Oberfläche aufweist;
b) Detektieren der zu beschichtenden Bereiche mittels eines Detektionsteils (40) durch die Verwendung von Bestrahlung mit Licht in Richtung der zweiten Oberfläche des Basismaterials (90),
basierend auf einer Differenz in der reflektierten Lichtmenge; und
c) Beschichten der zu beschichtenden Bereiche der zweiten Oberfläche, die durch den Detektionsteil (40) detektiert werden, mit einer Beschichtungsflüssigkeit mittels eines Beschichtungsteils (30) an einer Position in einer Transportrichtung gesehen stromabwärts von dem Detektionsteil (40),
wobei das Licht, das von dem Detektionsteil (40) auf die zweite Oberfläche des Basismaterials (90) gestrahlt wird, durch das Basismaterial (90) gehen kann,
wobei eine Vorderkante jedes der zu beschichtenden Bereiche, die in der Transportrichtung gesehen stromabwärts liegt, in dem Schritt b) detektiert wird, wobei das Aufbringen einer Beschichtung aus der Beschichtungsflüssigkeit in dem Schritt c) als Reaktion auf den Zeitpunkt der Detektion der Vorderkante jedes der zu beschichtenden Bereiche in dem Schritt b) gestartet wird,
wobei ein Abstand zwischen der Position der Beschichtung mittels des Beschichtungsteils (30) und der Position der Lichtbestrahlung mittels des Detektionsteils (40) kürzer ist als ein Abstand zwischen Vorderkanten von zwei benachbarten der zu beschichtenden Bereiche, die in der Transportrichtung aneinandergrenzen,
wobei die zu beschichtenden Bereiche mit einer ersten Katalysatorschicht (9A) zusammenfallen, die auf der ersten Oberfläche gebildet ist, **gekennzeichnet durch** ferner umfassend den Schritt des Einstellens des Bestrahlungswinkels des Lichts des Schritts b) in einem Winkel zu der ersten Katalysatorschicht, um die Änderung der reflektierten Lichtmenge zu erhöhen,
wobei der Schritt a) ein Transportieren des Basismaterials unter Verwendung einer Walze (10) umfasst, die sich dreht, während sie das Basismaterial (90) auf einer Außenumfangsfläche davon hält,
wobei der Schritt b) ein Bestrahlen des Basismaterials (90) umfasst, das auf der Außenumfangsfläche der Walze (10) gehalten wird, und
die Außenumfangsfläche der Walze (10) mit Licht zu bestrahlen,
wobei der Schritt c) ein Beschichten des Basismaterials (90) umfasst, das auf der Außenumfangsfläche der Walze (10) gehalten wird, und
wobei das Basismaterial (90) transparent ist und die erste Katalysatorschicht (9A) eine Farbe mit einem hohen Absorptionskoeffizienten aufweist.

## Revendications

1. Appareil d'enrobage, comprenant :
une partie d'acheminement (10) pour acheminer un matériau de base allongé en forme de bande (90) dans le sens longitudinal, ledit matériau de base (90) comprenant une pluralité de zones à enrober agencées dans ledit sens longitudinal, lesdites zones à enrober étant des zones dans lesquelles des pellicules de revêtement doivent être formées de façon à être agencées dans ledit sens longitudinal, ledit matériau de base (90) possédant une première surface et une deuxième surface ;
une partie de détection (40) pour détecter lesdites zones à enrober par le biais d'un rayonnement lumineux vers ladite deuxième surface dudit matériau de base (90) d'après une différence dans la quantité de rayonnement réfléchie ; et
une partie d'enrobage (30) disposée en aval de la partie de détection (40) vue dans le sens de l'acheminement, et assurant l'enrobage, avec un liquide d'enrobage, desdites zones à enrober de ladite deuxième surface détectée par ladite partie de détection (40),
ledit rayonnement lumineux émis par ladite partie de détection (40) vers ladite deuxième surface dudit matériau de base (90) pouvant être émis à travers ledit matériau de base (90),
ladite partie de détection (40) étant configurée pour détecter un bord d'attaque de chacune desdites zones à enrober, qui se trouve en aval vu dans ledit sens de l'acheminement,
ladite partie d'enrobage (30) étant configurée pour commencer une application d'un enrobage dudit liquide d'enrobage en fonction de la temporisation de la détection du bord d'attaque de chacune desdites zones à enrober à l'aide de ladite partie de détection (40), et
une distance entre la position de l'enrobage à l'aide de ladite partie d'enrobage (30) et la position du rayonnement lumineux à l'aide de ladite partie de détection (40) étant plus courte qu'une distance entre les bords d'attaque de deux zones adjacentes parmi les zones à enrober, qui sont contiguës dans ledit sens de l'acheminement,
lesdites zones à enrober coïncidant avec une première couche de catalyseur (9A) formée sur ladite première surface,
**caractérisé en ce que**
ladite partie de détection (40) étant en mesure d'ajuster l'angle du rayonnement lumineux à un angle avec ladite première couche de catalyseur, de façon à augmenter la variation de la quantité de lumière réfléchie,
ladite partie d'acheminement (10) comprenant un rouleau (10) tournant tout en maintenant ledit matériau de base (90) sur la surface périphérique extérieure de celui-ci,
ladite partie de détection (40) étant configurée pour rayonner ledit matériau de base (90) maintenu sur la surface périphérique extérieure dudit rouleau (10) avec la lumière,
ladite partie d'enrobage (30) étant configurée pour enrober ledit matériau de base (90) maintenu sur la surface périphérique extérieure dudit rouleau (10) avec le liquide d'enrobage, et
ledit matériau de base (90) étant transparent et ladite première couche de catalyseur (9A) présentant une couleur avec un coefficient d'absorption élevé.

2. Appareil d'enrobage selon la revendication 1,
ladite partie de détection (40) étant configurée pour détecter les zones à enrober dans une pluralité d'emplacements agencés dans le sens de la largeur dudit matériau de base (90).

3. Appareil d'enrobage selon une quelconque des revendications 1 à 2,
comprenant en outre un couvercle de la partie de détection (41A) agencé entre ladite partie d'enrobage (30) et ladite partie de détection (40).

4. Appareil d'enrobage selon une quelconque des revendications 1 à 3,
ladite partie de détection (40) étant configurée pour recevoir la lumière reflétée par lesdites zones à enrober pour détecter ainsi lesdites zones à enrober, et
ladite partie d'enrobage (30) étant configurée pour appliquer une couche du liquide à enrober pendant une période égale à la période au cours de laquelle ladite partie de détection (40) détecte chacune des zones à enrober par ladite lumière réfléchie.

5. Appareil d'enrobage selon une quelconque des revendications 1 à 4,
ladite partie de détection (40) comprenant un capteur à fibres (41),

6. Procédé d'enrobage comprenant les étapes suivantes :
a) acheminement d'un matériau de base allongé en forme de bande (90) dans le sens longitudinal, ledit matériau de base (90) comprenant une pluralité de zones à enrober agencées dans ledit sens longitudinal, lesdites zones à enrober étant des zones dans lesquelles des pellicules de revêtement doivent être formées de façon à être agencées dans ledit sens longitudinal, ledit matériau de base (90) possédant une première surface et une deuxième surface ;
b) détection desdites zones à enrober à l'aide d'une partie de détection (40) par le biais d'un rayonnement lumineux vers ladite deuxième surface dudit matériau de base (90), basée sur une différence relative à la quantité de rayonnement réfléchie ; et
c) enrobage desdites zones à enrober de ladite deuxième surface détectée par ladite partie de détection (40) avec un liquide d'enrobage par le biais d'une partie d'enrobage (30) dans une position en aval de ladite partie de détection (40) vue dans le sens de l'acheminement,
ledit rayonnement lumineux émis par ladite partie de détection (40) vers ladite deuxième surface dudit matériau de base (90) pouvant être émis à travers ledit matériau de base (90),
un bord d'attaque de chacune desdites zones à enrober, qui se trouve en aval vu dans ledit sens de l'acheminement, étant détecté à ladite étape b), l'application d'un enrobage dudit liquide d'enrobage étant commencée à ladite étape c) en fonction du moment de la détection du bord d'attaque de chacune desdites zones à enrober à ladite étape b), et
une distance entre la position de l'enrobage à l'aide de ladite partie d'enrobage (30) et la position du rayonnement lumineux à l'aide de ladite partie de détection (40) étant plus courte qu'une distance entre les bords d'attaque de deux zones adjacentes desdites zones à enrober, qui sont contiguës dans ledit sens de l'acheminement,
lesdites zones à enrober coïncidant avec une première couche de catalyseur (9A) formée sur ladite première surface,
**caractérisé en ce qu'**il comprend en outre l'étape d'ajustage de l'angle du rayonnement lumineux de ladite lumière à l'étape b) à un angle avec ladite première couche de catalyseur, de façon à augmenter la variation de la quantité de lumière réfléchie,
l'étape a) comprenant l'acheminement dudit matériau de base par la rotation d'un rouleau (10) tout en maintenant ledit matériau de base (90) sur une surface périphérique extérieure de celui-ci,
ladite étape b) comprenant le rayonnement dudit matériau de base (90) maintenu sur la surface périphérique extérieure dudit rouleau (10) avec la lumière,
l'étape c) comprenant l'enrobage dudit matériau de base (90) maintenu sur la surface périphérique extérieure dudit rouleau (10) avec le liquide d'enrobage, et
ledit matériau de base (90) étant transparent et ladite première couche de catalyseur (9A) présentant une couleur ayant un coefficient d'absorption élevé.
